# EUROPEAN PATENT APPLICATION

(11) **EP 3 486 620 A2**
(43) Date of publication of application: **22.05.2019**
(21) Application number: 18206654.8
(22) Date of filing: 16.11.2018
(51) Int. Cl.: G01G 19/414

(54) **MEASURING DEVICE AND INFORMATION PROCESSING PROGRAM FOR CONTROL OF MEASURING DEVICE**

(30) Priority: 17.11.2017 JP 2017221782
(71) Applicant: Toshiba Tec Kabushiki Kaisha, Shinagawa-ku Tokyo 141-8562 (JP)
(72) Inventor: KUDOU, Daigo, Shinagawa-ku,, Tokyo 141-8562 (JP)
(74) Representative: Fédit-Loriot

(57) **Abstract**

A measuring device includes a weight meter, a determining unit, an identifying unit, and a notification processing unit. The weight meter measures a weight. The determining unit determines, on the basis of a weight of food and drink measured by the weight meter, an intake amount involved in eating and drinking of the food and drink concerning at least one of a component and a calorie determined in advance. The identifying unit identifies a purchaser of the food and drink. The notification processing unit performs notification processing. If a reference amount decided in association with the purchaser identified by the identifying unit and the intake amount determined by the determining unit are in a predetermined relation, the notification processing unit provides a notification to the purchaser to that effect.

## Description

### FIELD

The present invention relates to the field of a information processing technology in general, and embodiments described herein relate in particular to a measuring device and an information processing program for control of the measuring device.

### BACKGROUND

There is known a measuring device that measures any amount of food and drink to be purchased by a purchaser and calculates a price of the food and drink. In the measuring device of this type, it is also conceived to obtain information other than the price such as an intake calorie and provide the information to the purchaser.
However, the measuring device does not provide information considering conditions such as an allergy and calorie restriction of the purchaser.

### SUMMARY OF INVENTION

To solve such problem, there is provided a measuring device comprising:
a weight meter configured to measure a weight;
a processor configured to
   determine, on the basis of a weight of at least one consumable measured by the weight meter, an intake amount involved in consumption of the at least one consumable concerning at least one of a component and a calorie determined in advance;
identify a purchaser of the at least one consumable; and
a notification processor configured to provide a notification to the purchaser when a reference amount decided in association with the purchaser identified by the processor and the intake amount determined by the processor are in a predetermined relation.

Preferably, the device further comprises a reader configured to read an identification code stored in a storage medium, wherein
the processor is configured to identify the purchaser as a person identified by the identification code read by the reader.

Preferably still, the notification processor is configured to transmit information to one or more information terminals.

Preferably yet, the processor is configured to cause a display to show the notification and a result of the determination of the intake amount.

The invention also relates to a measuring device comprising:
a weight meter configured to measure a weight;
a processor configured to
   generate a list of consumables, weights of which are already measured by the weight meter, the list of consumables including the measured weights;
   determine, on the basis of the weights of respective consumables included in the list generated by the processor, an intake amount involved in consumption of the consumables included in the list concerning at least one of the component and the calorie determined in advance;
   identify a purchaser of the consumables; and
a notification processor configured to, perform notification processing for when a reference amount decided in association with the purchaser identified by the processor and the intake amount determined by the processor are in a predetermined relation, notify the purchaser to that effect.

Preferably, the device further comprises a reader configured to read an identification code stored in a storage medium, wherein
the processor is configured to identify the purchaser as a person identified by the identification code read by the reader.

Preferably still, the notification processor is configured to transmit information to one or more information terminals.

Preferably yet, the processor is configured to cause a display to show the notification and a result of the determination of the intake amount.

Suitably, the processor is configured to determine the intake amount for a combination of different consumables placed on a single container.

The invention also concerns an information processing method for controlling a measuring device including a weight meter configured to measure a weight, the information processing method comprising:
determining, on the basis of a weight of at least one consumable measured by the weight meter, an intake amount involved in consumption of the at least one consumable concerning at least one of a component and a calorie determined in advance;
identifying a purchaser of the at least one consumable; and
performing notification processing for, when a reference amount decided in association with the identified purchaser and the determined intake amount are in a predetermined relation, notifying the purchaser to that effect.

Preferably, the method further comprises:
reading an identification code stored in a storage medium, and
identifying the purchaser as a person identified by the identification code read by the reader.

Preferably still, the method comprises transmitting information to one or more information terminals after performing the notification processing.

Preferably yet, the method further comprises displaying the notification and a result of the determination of the intake amount.

The invention further relates to an information processing method for controlling a measuring device including a weight meter configured to measure a weight, the information processing method comprising:
generating a list of consumables, weights of which are measured previously by the weight meter, the list of consumables including their respective measured weights;
determining, on the basis of the weights of the respective consumables included in the generated list, an intake amount involved in consumption of the consumables;
identifying a purchaser of the consumables; and
performing notification processing for, when a reference amount decided in association with the identified purchaser and the determined intake amount are in a predetermined relation, notifying the purchaser to that effect.

Preferably, the method further comprises:
reading, by a reader, an identification code stored in a storage medium,
wherein identifying the purchaser comprises identifying a person identified by the identification code which is read by the reader.

Preferably still, the method further comprises transmitting information to one or more information terminals after performing the notification processing.

Preferably yet, the method further comprises displaying the notification and a result of the determination of the intake amount.

Suitably, the method further comprises determining the intake amount for a combination of different consumables placed on a single container.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a main part circuit configuration of a measuring device according to a first embodiment;
FIG. 2 is a perspective view illustrating the exterior of the measuring device according to the first embodiment;
FIG. 3 is a flowchart of information processing in the first embodiment by a processor illustrated in FIG. 1;
FIG. 4 is a flowchart of the information processing in the first embodiment by the processor illustrated in FIG. 1;
FIG. 5 is a diagram illustrating an example of a first result screen;
FIG. 6 is a diagram illustrating an example of a second result screen; and
FIG. 7 is a flowchart of information processing in a second embodiment of the processor illustrated in FIG. 1.

### DETAILED DESCRIPTION

As mentioned above, a measuring device does not provide information concerning conditions such as allergy and calorie restrictions of the purchaser. Because of such circumstances, it is desired to provide information concerning intake of measurement target food and drink consideration conditions of a purchaser of the food and drink. An object is to provide a measuring device and an information processing program for control of the measuring device that can provide information concerning intake of measurement target food and drink considering conditions of a purchaser of the food and drink.

In general, according to at least one embodiment, a measuring device includes a weight meter, a determining unit, an identifying unit, and a notification processing unit. The weight meter measures a weight. The determining unit determines, on the basis of a weight of food and drink measured by the weight meter, an intake amount involved in eating and drinking (that is, consumption) of the food and drink concerning at least one of a component and a calorie determined in advance. It should be understood that references to "food and drink" include one or more consumables (i.e., one or more of a food and/or a drink). The identifying unit identifies a purchaser of the food and drink. The notification processing unit performs notification processing for, if a reference amount decided in association with the purchaser identified by the identifying unit and the intake amount determined by the determining unit are in a predetermined relation, notifying the purchaser to that effect.

Some embodiments are explained below with reference to the drawings.

### First Embodiment

A first embodiment relates to a measuring device suitable for selling daily dishes by measure in a delicatessen section of a supermarket or the like. In the following explanation, "daily dishes" include all foods and drinks that can be sold by measure in the delicatessen section. That is, for example, "polished rice" may be one of the "daily dishes".

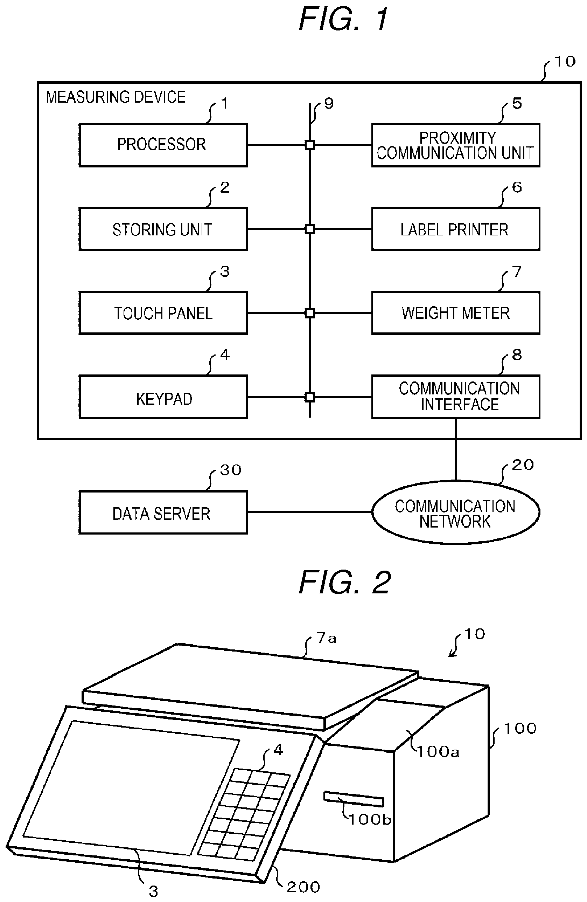

FIG. 1 is a block diagram illustrating a main part circuit configuration of a measuring device 10 according to the first embodiment. FIG. 2 is a perspective view illustrating the exterior of the measuring device 10. In FIGS. 1 and 2, the same components are denoted by the same reference numerals and signs.

As illustrated in FIG. 1, the measuring device 10 includes a processor 1, a storing unit 2, a touch panel 3, a keypad 4, a proximity communication unit 5, a label printer 6, a weight meter 7, a communication interface 8, and a transmission path 9.

The processor 1, the storing unit 2, the proximity communication unit 5, the label printer 6, the weight meter 7, and the communication interface 8 are housed on the inside of a housing 100 illustrated in FIG. 2. The touch panel 3 and the keypad 4 are attached to an operation panel 200 illustrated in FIG. 2.
The processor 1 and the storing unit 2 configure a computer for executing information processing for controlling the measuring device 10. The processor 1 is equivalent to a central portion of the computer. The processor 1 executes information processing conforming to an operating system and application programs to control the units in order to realize various functions of the measuring device 10.
The storing unit 2 is equivalent to a main storage portion of the computer. The storing unit 2 includes a nonvolatile memory region and a volatile memory region. The storing unit 2 stores the operating system and the application programs in the nonvolatile memory region. The storing unit 2 sometimes stores, in the nonvolatile or volatile memory region, data necessary for the processor 1 to execute processing for controlling the units. The storing unit 2 uses the volatile memory region as a work area in which data is rewritten as appropriate by the processor 1. The storing unit 2 may include a storage device equivalent to an auxiliary storage portion of the computer. As the storage device, for example, an EEPROM (electric erasable programmable read-only memory), an HDD (hard disc drive), an SSD (solid state drive), or other well-known various storage devices can be applied as appropriate. The storage device saves data used by the processor 1 in performing various kinds of processing and data generated by the processing in the processor 1. The storage device sometimes stores the application programs.
The touch panel 3 displays various screens for notifying various kinds of information to an operator. Various instructions by the operator are input to the touch panel 3 by inputting touch operation on the screens to the touch panel 3.

The keypad 4 is an array of a plurality of keys including a ten key. Various designations such as numerical values by the operator are input by inputting key operation to the keypad 4.

In this embodiment, the touch panel 3 and the keypad 4 are attached to the operation panel 200 side by side. The operation panel 200 is attached to the housing 100 such that a tilt with respect to the housing 100 can be changed to change the directions of the touch panel 3 and the keypad 4.
The proximity communication unit 5 reads, through wireless communication, information stored in a radio tag brought close to a communication surface 100a set as a part of the upper surface of the housing 100.

The label printer 6 issues a label representing an amount of a price and attached to, for example, a container that stores food and drink. The label issued by the label printer 6 is discharged to the outside of the housing 100 through an issue port 100b formed in the housing 100.

The weight meter 7 includes a scale pan 7a disposed on the outside of the housing 100. The weight meter 7 measures the weight of an article placed on the scale pan 7a.
The communication interface 8 performs data communication via a communication network 20. As the communication interface 8, for example, a well-known interface configured to perform well-known processing for data communication via a LAN (local area network) and the Internet can be used. A communication target of the communication interface 8 is, for example, a data server 30.

The transmission path 9 includes an address bus, a data bus, and a control signal line and transmits data and control signals exchanged among the connected units.
The measuring device 10 stores an information processing program describing information processing explained below in the storing unit 2 as one of the application programs. The information processing program may be stored in the storing unit 2 when hardware of the measuring device 10 is transferred or may be transferred separately from the hardware. In the latter case, the information processing program is recorded in a removable recording medium such as a magnetic disk, a magneto-optical disk, an optical disk, or a semiconductor memory and transferred or is transferred via a network. In the latter case, it is assumed that the information processing program is provided as a version-up program to replace another information processing program of the same type already stored in the storing unit 2.
The data server 30 manages a commodity database and a member database.

The commodity database is a set of information concerning foods and drinks to be sold by measure using the measuring device 10. The commodity database includes, in association with a commodity code for identifying each of the foods and drinks, for example, various kinds of information to be displayed on a label such as a commodity name, a price per unit weight, and a use-by date of the food and drink. The commodity database further indicates contents in the unit weight of the food and drink concerning components such as allergens, raw materials, and nutrients. The commodity database further indicates a calorie included in the unit weight of the food and drink. However, the commodity database may indicate only one of the contents and the calories of the components. The contents of the components indicated by the commodity database are optional.

The member database is a set of information concerning purchasers registered as members. The member database includes, in association with member codes for identifying individual members, for example, data representing conditions for information provision to the members.
The operation of the measuring device 10 configured as explained above is described.

The measuring device 10 is set in a delicatessen section of a supermarket or the like. The measuring device 10 measures a daily dish, which is a commodity to be sold by measure, and issues a label representing a sales price and the like corresponding to the weight of the daily dish. A purchaser puts the daily dish to be purchased in a predetermined container by any amount, places the container containing the daily dish on the scale pan 7a, and sticks the label issued by the measuring device 10 on the container.
If the purchaser desires to receive information provision for individuals during such work, the purchaser performs membership registration beforehand. The membership registration may be registration for receiving information provision in the measuring device 10 or registration for receiving any other service may be diverted to the membership registration. In this embodiment, a purchaser registered as a member for a point service is set as a target of the information provision for individuals in the measuring device 10. A member code included in the member database of the data server 30 is a member code allocated to the purchaser already registered as the member for the point service. The purchaser already registered as the member has a membership card incorporating a tag that transmits the member code through proximity wireless communication.
The purchaser accesses the data server 30 using any information terminal and sets conditions for receiving information provision. The set conditions are included in the member database in association with the member code. The conditions may be optional. For example, conditions described below are assumed.

An intake amount of an allergen (xx) is yy g or more.

An intake amount of a raw material (xx) is yy g or more.

An intake calorie is yy kcal or more.

An intake amount of a nutrient (xx) is yy g or more.

In the above specific examples of the conditions, "yy" is a reference amount decided as any numerical value. "xx" in the "allergen (xx)" is any allergen substance such as egg, milk, or wheat. "xx" in the "raw material (xx)" is any raw material such as pork or liquor. "xx" in the "nutrient (xx)" is any nutrient such as sugar or lipid.
If the measuring device 10 is in an operation state for measuring a daily dish and issuing a label, the processor 1 executes information processing explained below according to the information processing program stored in the storing unit 2.

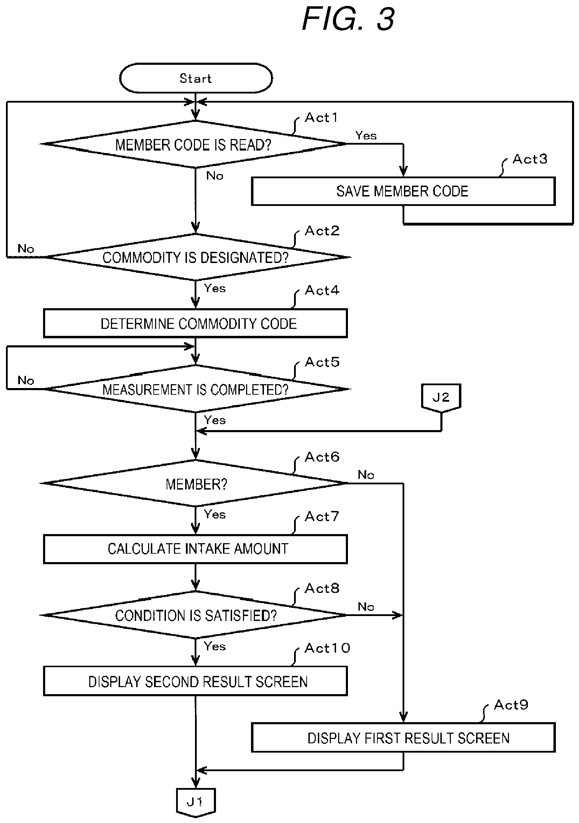

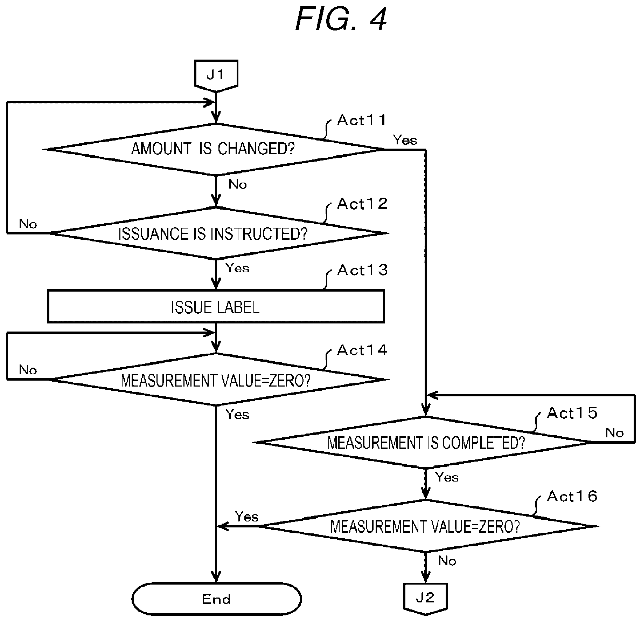

FIGS. 3 and 4 are flowcharts of the information processing by the processor 1. Content of the processing explained below is an example. Various kinds of processing capable of obtaining the same result can be used as appropriate.
In Act 1, the processor 1 confirms whether a member code is read by the proximity communication unit 5. If determining No because the member code is not read, the processor 1 proceeds to Act 2.

In Act 2, the processor 1 confirms whether a measurement target commodity is designated. If determining No because a measurement target commodity is not designated, the processor 1 returns to Act 1.

In this way, in Act 1 and Act 2, the processor 1 waits for a member code to be read or a commodity to be designated.
If a purchaser desires to receive information provision in the measuring device 10, the purchaser brings a membership card close to the communication surface 100a prior to designating a commodity. Then, proximity wireless communication is started between a tag incorporated in the membership card and the proximity communication unit 5. A member code stored in the tag is read by the proximity communication unit 5. That is, the proximity communication unit 5 is an example of a reading unit (a reader) that reads the member code, which is an identification code, stored in the membership card functioning as a storage medium. The processor 1 determines Yes in Act 1 because the member code is read and proceeds to Act 3.
In Act 3, the processor 1 saves the member code read by the proximity communication unit 5 in the storing unit 2. Thereafter, the processor 1 returns to the waiting state in Act 1 and Act 2. After executing Act 3, if the processor 1 proceeds to Act 3 again because a member code is acquired by the proximity communication unit 5 again, the processor 1 overwrites and saves the member code read anew.
Prior to placing a daily dish to be purchased on the scale pan 7a, the purchaser performs, for example, with the touch panel 3 or the keypad 4, predetermined operation for designating which daily dish is set as a measurement target commodity. Specifically, for example, the processor 1 displays, on the touch panel 3, a GUI (graphical user interface) screen on which a plurality of buttons associated with respective daily dishes to be sold by measure are arrayed. The purchaser touches a button corresponding to a daily dish to be purchased. If the daily dish is designated in this way, the processor 1 determines Yes in Act 2 and proceeds to Act 4. The processor 1 may recognize, on the basis of a photographed image of a daily dish placed on the scale pan 7a, with information processing, which daily dish the daily dish is.

In Act 4, the processor 1 determines a commodity code of the daily dish designated as explained above.
In Act 5, the processor 1 waits for the measurement to be completed. Specifically, for example, if a measurement value by the weight meter is stable for a fixed time at a value other than zero, the processor 1 determines Yes because the measurement is completed and proceeds to Act 6. In the following explanation, the measurement value at the measurement completion time is referred to as measured weight.
In Act 6, the processor 1 confirms whether the purchaser is a member. For example, the processor 1 confirms whether a member code is saved in the storing unit 2 in Act 3. If the member code is saved in the storing unit 2, the processor 1 determines Yes and proceeds to Act 7. That is, if the member code is saved in the storing unit 2, the processor 1 identifies the purchaser as the member identified by the member code. In this way, the processor 1 executes the information processing based on the information processing program, whereby the computer including the processor 1 as a central portion functions as an identifying unit (identifier).
In Act 7, the processor 1 calculates an intake amount at the time when the daily dish identified by the commodity code determined in Act 4 is taken in by the measured weight. The calculated intake amount is an intake amount concerning a component or a calorie necessary for determining whether the conditions for receiving the information provision are satisfied. For example, the processor 1 acquires, from the data server 30, conditions included in the member database in association with the member code saved in the storing unit 2 in Act 3 and contents and calories of components included in the commodity database in association with the commodity code determined in Act 4. The processor 1 calculates, as values obtained by multiplying values concerning contents or calories included in the acquired conditions among the acquired contents and the acquired calories by a value calculated by dividing the measured weight by a unit weight, intake amounts of the components. More specifically, if "an intake amount of an allergen (egg) is yy g or more" is included in the acquired conditions, the processor 1 calculates an intake amount of the "allergen (egg)" by multiplying a content per unit weight of the "allergen (egg)" by a value calculated as "measured weight÷unit weight". If "an intake amount of a raw material (pork) is yy g or more" is included in the acquired conditions, the processor 1 calculates an intake amount of the "raw material (pork)" by multiplying a content per unit weight of the "pork" by a value calculated as "measured weight÷unit weight". If "an intake calorie is yy kcal or more" is included in the acquired conditions, the processor 1 calculates an intake calorie by multiplying a calorie per unit weight by a value calculated as "measured weight÷unit weight". If "an intake amount of a nutrient (sugar) is yy g or more" is included in the acquired conditions, the processor 1 calculates an intake amount of the "nutrient (sugar)" by multiplying a content per unit weight of the "sugar" by a value calculated as "measured weight÷unit weight". In this way, the processor 1 executes the information processing based on the information processing program, whereby the computer including the processor 1 as the central portion functions as a determining unit.
In Act 8, the processor 1 confirms whether at least one of the conditions acquired as explained above is satisfied. If none of the conditions are satisfied, the processor 1 determines No and proceeds to Act 9. If the purchaser is not a member, the processor 1 determines No in Act 6 and proceeds to Act 9 skipping Act 7 and Act 8.

In Act 9, the processor 1 causes the touch panel 3 to display a first result screen. The first result screen is a screen that displays a result of measurement and does not display information provided to each purchaser.

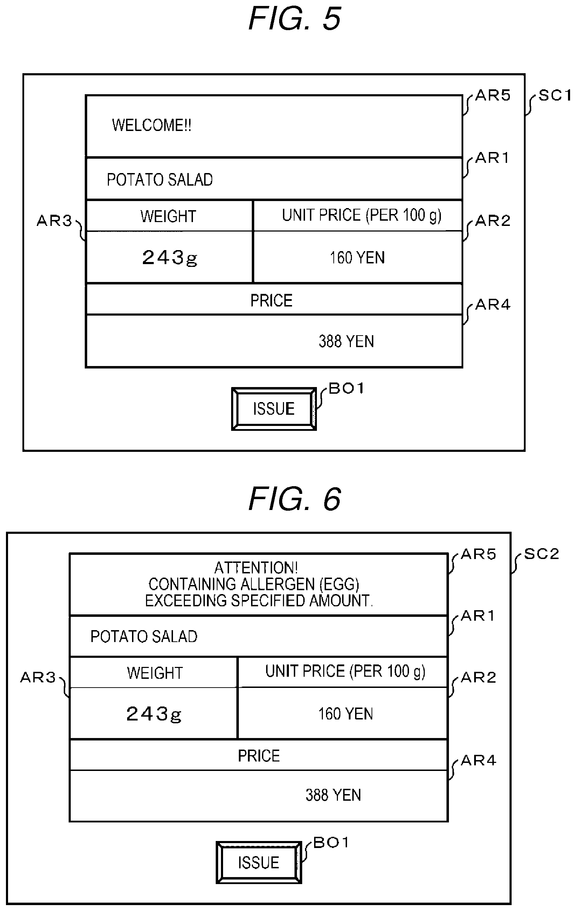

FIG. 5 is a diagram illustrating an example of a first result screen SC1.

The first result screen SC1 includes display areas AR1, AR2, AR3, AR4, and AR5 and a button BO1.
The display area AR1 is an area for displaying a commodity name. The display area AR2 is an area for displaying a price per unit weight, that is, a unit price. The processor 1 acquires, from the data server 30, a commodity name and a unit price included in the commodity database in association with the commodity code determined in Act 4 and displays the commodity name and the unit price respectively in the display areas AR1 and AR2. In FIG. 5, an example is illustrated in which the commodity name is "potato salad" and the unit prices is 160 yen.
The display area AR3 is an area for displaying a measured weight. The display area AR4 is an area for displaying a sales price concerning a daily dish placed on the scale pan 7a. The processor 1 displays a measured weight by the weight meter 7 and an amount obtained by multiplying the unit price by a value calculated as "measured weight÷unit weight" respectively in the display areas AR3 and AR4. In FIG. 5, an example is illustrated in which the measured weight is 243 g and the sales price is 388 yen.
The display area AR5 is an area for displaying various messages to purchasers. The processor 1 displays a common message to a large number of purchasers in the display area AR5 of the first result screen SC1. Content of the message may be optional and is decided by a designer or an administrator of the measuring device 10.

The button BO1 is a button with which a purchaser designates issuance of a label.
On the other hand, if at least one of the acquired conditions is satisfied, the processor 1 determines Yes in Act 8 and proceeds to Act 10.

In Act 10, the processor 1 causes the touch panel 3 to display a second result screen. The second result screen is a screen that displays a result of measurement and displays information provided to each purchaser.
Like the first result screen SC1, the second result screen includes the display areas AR1 to AR5 and the button BO1. The processor 1 displays, in the display areas AR1 to AR4, the same information as the information displayed on the first result screen SC1. That is, the second result screen is different from the first result screen SC1 in information displayed in the display area AR5. The processor 1 displays, in the display area AR5, a message corresponding to the condition determined as being satisfied.
FIG. 6 is a diagram illustrating an example of a second result screen SC2.

In this example, the processor 1 displays, in the display area AR5, a message "Attention! Containing an allergen (egg) exceeding a specified amount". This is an example in which the condition "an intake amount of an allergen (egg) is yy g or more" is satisfied.
If the condition "an intake amount of a raw material (pork) is yy g or more" is satisfied, the processor 1 displays, in the display area AR5, for example, "Attention! Containing pork exceeding a specified amount". If the condition "an intake calorie is yy kcal or more" is satisfied, the processor 1 displays, in the display area AR5, for example, "Attention! An intake calorie (303 kcal) exceeds a specified amount". "303 kcal" in the example is the value of the intake calorie which is calculated as described above. If the condition "an intake amount of a nutrient (sugar) is yy g or more" is satisfied, the processor 1 displays, in the display area AR5, for example, "Attention! Containing sugar exceeding a specified amount".
If a plurality of conditions are satisfied, the processor 1 displays messages respectively corresponding to the conditions in the display area AR5. In this case, the processor 1 periodically updates the second result screen SC2 to sequentially display a plurality of messages in the display area AR5. Alternatively, the processor 1 may simultaneously display the plurality of messages side by side in the display area AR5.
In this way, the processing related to the display of the second result screen SC2 is an example of notification processing for, if a reference amount and an intake amount decided in association with a purchaser are in a predetermined relation, notifying the purchaser to that effect. In this way, the processor 1 executes the information processing based on the information processing program, whereby the computer including the processor 1 as the central portion functions as a notification processing unit that performs the notification processing.
If the processor 1 finishes Act 9 or Act 10, the processor 1 proceeds to Act 11 in FIG. 4 in a state in which the first result screen or the second result screen is displayed.

In Act 11, the processor 1 confirms whether an amount of the daily dish placed on the scale pan 7a is changed. If a measurement value is not changed, the processor 1 determines No and proceeds to Act 12.

In Act 12, the processor 1 confirms whether label issuance is instructed. If the label issuance is not instructed, the processor 1 determines No and returns to Act 11.

In this way, in Act 11 and Act 12, the processor 1 waits for the amount of the daily dish to change or the label issuance to be instructed.
In this waiting state, if the purchaser determines to purchase the daily dish placed on the scale pan 7a, the purchaser performs predetermined operation for instructing label issuance. The operation is, for example, touch operation on the button BO1 displayed on the first result screen SC1 and the second result screen SC2. If the label issuance is instructed by the operation, the processor 1 determines Yes in Act 12 and proceeds to Act 13.
In Act 13, the processor 1 instructs the label printer 6 to issue a label. According to the instruction, the label printer 6 issues a label on which a commodity name, a unit price, a measured weight, a sales price, and the like are displayed. The label is discharged to the outside of the housing 100 through the issue port 100b. The purchaser removes the label and the daily dish placed on the scale pan 7a and sticks the label on a container containing the daily dish.
In Act 14, the processor 1 waits for the measurement value to decrease to zero. If the daily dish placed on the scale pan 7a is removed by the purchaser as explained above, the measurement value of the weight meter 7 decreases to zero soon. The processor 1 determines Yes according to the decrease of the measurement value to zero and ends the information processing illustrated in FIGS. 3 and 4.
On the other hand, if the processor 1 is in the waiting state in Act 11 and Act 12, the purchaser can also increase or reduce an amount of the daily dish placed on the scale pan 7a or remove the daily dish from the scale pan 7a to cancel the purchase. Consequently, if the measurement value changes, the processor 1 determines Yes in Act 11 and proceeds to Act 15.
In Act 15, the processor 1 waits for the measurement to be completed as in Act 5. If the measurement is completed, the processor 1 determines Yes and proceeds to Act 16.

In Act 16, the processor 1 confirms whether the measurement value is zero. If the purchaser increases or reduces the amount of the daily dish placed on the scale pan 7a, the measurement value does not decrease to zero. In this case, the processor 1 determines No and repeats Act 6 and subsequent acts in FIG. 3 as explained above. If the purchaser removes the daily dish from the scale pan 7a in order to cancel the purchase of the daily dish placed on the scale pan 7a, the measurement value decreases to zero. In this case, the processor 1 determines Yes in Act 16 and ends the information processing in FIGS. 3 and 4.
After ending the information processing in FIGS. 3 and 4, the processor 1 confirms that the measured weight remains zero and, for example, performs initialization for, for example, clearing the member code saved in the storing unit 2 and thereafter starts the information processing again.
As explained above, the measuring device 10 in the first embodiment can perform information provision concerning intake of a measurement target daily dish considering conditions of a purchaser of the daily dish through display on the second result screen SC2.
The measuring device 10 in the first embodiment reads a member code from a membership card with the proximity communication unit 5 to thereby identify a purchaser as a member identified by the member code. Therefore, simply by causing the measuring device 10 to read the membership card, the purchaser can finish a procedure for receiving information provision that considers conditions of the purchaser.

### Second Embodiment

In a second embodiment, a measuring device suitable in a business form for selling a box lunch prepared by a purchaser optionally combining foods and drinks individually sold by measure in a supermarket or a box lunch sales store is explained as an example.

The measuring device in the second embodiment can be realized by the same configuration as the configuration of the measuring device 10 in the first embodiment. Therefore, explanation of the configuration is omitted. In the following explanation, FIGS. 1 and 2 are referred to.
The measuring device 10 in the second embodiment is different from the measuring device 10 in the first embodiment in that an application program representing information processing explained below is stored in the storing unit 2 instead of the application program representing the information processing illustrated in FIGS. 3 and 4. The processor 1 performs the information processing as explained below on the basis of the application program.

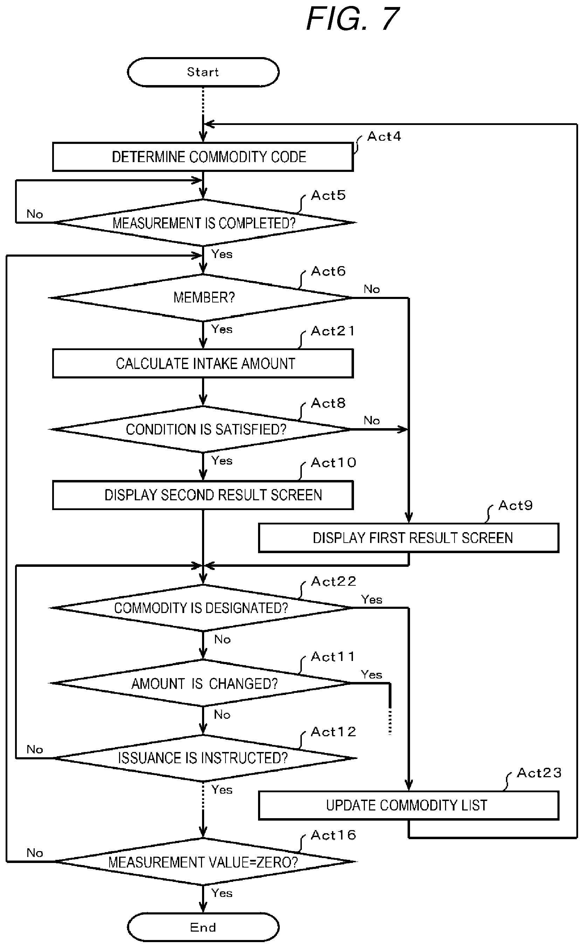

FIG. 7 is a flowchart of a part of the information processing by the processor 1. The same kinds of processing as the processing illustrated in FIG. 4 are denoted by the same reference signs.
As in the first embodiment, the processor 1 executes the processing in Act 1 to Act 6 illustrated in FIG. 3. If determining Yes in Act 6, the processor 1 proceeds to Act 21. Processing in Act 21 is explained below. If finishing Act 21, the processor 1 executes Act 8 and Act 9 or Act 10 as in the first embodiment. The processor 1 proceeds from Act 9 or Act 10 to Act 22.
In Act 22, the processor 1 confirms whether a commodity is designated as in Act 2 in FIG. 3. If determining No because a commodity is not designated, the processor 1 proceeds to Act 11. If determining No in Act 11, the processor 1 proceeds to Act 12. If determining No in Act 12 as well, the processor 1 returns to Act 22. In this way, in Act 22, Act 11, and Act 12, the processor 1 waits for a commodity to be designated, an amount of a daily dish to change, or label issuance to be instructed. If determining Yes in Act 11 because a measurement value changes or if determining in Yes in Act 12 because the label issuance is instructed, the processor 1 executes the following processing as in the first embodiment.
The purchaser places, on the scale pan 7a, for example, a container on which a plurality of daily dishes can be dished up, and sequentially places the plurality of daily dishes on the container (which may be a single container). In this case, prior to placing the next daily dish, the purchaser designates the commodity. If the second or subsequent commodity is designated in this way, the processor 1 determines Yes in Act 22 and proceeds to Act 23.
In Act 23, the processor 1 updates a commodity list. The commodity list is a set of data records including measured weights and sales prices in association with commodity codes. The commodity list is cleared, for example, when information processing illustrated in FIG. 7 is started. The commodity list does not include data records when the processor 1 executes Act 23 for the first time. The processor 1 updates the commodity list to add, in association with the commodity code determined in Act 4, data records including a measured weight when the processor 1 determines Yes in Act 5 and a sales price calculated to be displayed on the first and second result screens concerning the measured weight. That is, the processor 1 generates a list of foods and drinks, the weights of which are already measured, the list of foods and drinks including the measured weights. In this way, the processor 1 executes the information processing based on the information processing program, whereby a computer including the processor 1 as a central portion functions as a generating unit (generator).

If determining the commodity code in Act 4, the processor 1 may add, to the commodity list, a data record including the commodity code and not including a significant value as weight. In this case, in Act 23, the processor 1 adds significant values representing the measured weights to the data record.
Thereafter, the processor 1 repeats the processing in Act 4 and subsequent acts. That is, the processor 1 executes Act 4 to Act 10 concerning a daily dish designated anew. At this time, the processor 1 determines in Act 5 that the measurement is completed if the measurement value by the weight meter is stable at a measurement value different from the measured weight when the processor 1 proceeds to Act 5. The processor 1 sets, as the weight of a daily dish designated at present, a weight obtained by subtracting the measured weight when the processor 1 proceeds to Act 5 from the measured weight when the processor 1 determines that the measurement is completed in this way. In Act 9 or Act 10, the processor 1 may display, on the first and second result screens, a sum of respective sales prices of the plurality of daily dishes illustrated in the commodity list.
In Act 21, the processor 1 calculates intake amounts concerning all of the daily dishes illustrated in the commodity list. Specifically, concerning the condition "an intake amount of an allergen (egg) is yy g or more", the processor 1 calculates intake amounts of the "allergen (egg)" for each of daily dishes identified by commodity codes included in the commodity list as in Act 7. Further, the processor 1 calculates an intake amount of the "allergen (egg)" concerning a measured daily dish group as a sum of the intake amounts.
As explained above, the measuring device 10 in the second embodiment can achieve the same effects as the effects in the first embodiment. In addition, the measuring device 10 in the second embodiment can perform, considering conditions of each purchaser, information provision concerning intake amounts of various components and calories by intake of a box lunch including a combination of a plurality of daily dishes dished up in a container.
Various modified implementations of this embodiment are possible as explained below.

A method of acquiring a member code may be optional. For example, reading from another recording medium such as a magnetic card, optical reading of a barcode or the like, or manual input in the touch panel 3 or the keypad 4 can be applied.
Identification of a purchaser, who is a member, may not depend on a member code. For example, a biometric authentication technique using a fingerprint or the like can be applied.
A label may not be issued. For example, a money reception device, an electronic money settlement terminal, a credit settlement terminal, or the like may be incorporated or externally attached to settle a sales price corresponding to a measured weight. The sales price may be notified to a device having a function of sales registration such as a POS terminal or a cash register together with a commodity code or the like.
The processor 1 may cause a portable information terminal carried by the purchaser to perform the screen display for information provision. In this case, the processor 1 only has to transmit information to the portable information terminal using, for example, communication via the communication network 20 or direct wireless communication using Wi-Fi. That is, the notification processing may be transmission of information to other information terminals.
Information provision by, for example, an output of a voice message from an incorporated or externally attached speaker may be performed instead of or in addition to the screen display. In this case, driving of the speaker for the output of the voice message is the notification processing.
All of the conditions for the information provision illustrated in one or more embodiments are that the intake amounts are equal to or more than the reference amounts. However, a relation between the intake amounts and the reference amounts may be decided in any way, for example, the intake amounts may be less than or equal to the reference amounts. For example, a condition such as "an intake amount of a nutrient (vitamin C) is less than yy mg" may be used.
The measuring device can also be realized as a measuring device for measurement of food and drink other than the daily dish if the food and drink is sold by measure.
At least one of the commodity database and the member database may be stored in the storing unit 2. The processor 1 may refer to the commodity database and the member database stored in the storing unit 2.
A part or all of the functions realized by the processor 1 through the information processing can also be realized by hardware that executes information processing not based on a computer program such as a logic circuit. Each of the functions can also be realized by combining software control with the hardware such as the logic circuit.
The several embodiments are explained above. However, the embodiments are presented as examples and are not intended to limit the scope of the invention. These embodiments can be implemented in other various forms. Various omissions, substitutions, and changes can be performed without departing from the scope of the invention. These embodiments and modifications of the embodiments are included in the scope and the gist of the invention and included in the inventions described in claims and the scope of equivalents of the inventions.

## Claims

1. A measuring device comprising:
a weight meter configured to measure a weight;
a processor configured to
determine, on the basis of a weight of at least one consumable measured by the weight meter, an intake amount involved in consumption of the at least one consumable concerning at least one of a component and a calorie determined in advance;
identify a purchaser of the at least one consumable; and
a notification processor configured to provide a notification to the purchaser when a reference amount decided in association with the purchaser identified by the processor and the intake amount determined by the processor are in a predetermined relation.

2. The device according to claim 1, further comprising a reader configured to read an identification code stored in a storage medium, wherein
the processor is configured to identify the purchaser as a person identified by the identification code read by the reader.

3. The device according to claim 1 or 2, wherein the notification processor is configured to transmit information to one or more information terminals.

4. The device according to any one of claims 1 to 3, wherein the processor is configured to cause a display to show the notification and a result of the determination of the intake amount.

5. A measuring device comprising:
a weight meter configured to measure a weight;
a processor configured to
generate a list of consumables, weights of which are already measured by the weight meter, the list of consumables including the measured weights;
determine, on the basis of the weights of respective consumables included in the list generated by the processor, an intake amount involved in consumption of the consumables included in the list concerning at least one of the component and the calorie determined in advance;
identify a purchaser of the consumables; and
a notification processor configured to, perform notification processing for when a reference amount decided in association with the purchaser identified by the processor and the intake amount determined by the processor are in a predetermined relation, notify the purchaser to that effect.

6. The device according to claim 5, further comprising a reader configured to read an identification code stored in a storage medium, wherein
the processor is configured to identify the purchaser as a person identified by the identification code read by the reader.

7. The device according to claim 5 or 6, wherein the notification processor is configured to transmit information to one or more information terminals.

8. The device according to any one of claims 5 to 7, wherein the processor is configured to cause a display to show the notification and a result of the determination of the intake amount.

9. The device according to any one of claims 5 to 8, wherein the processor is configured to determine the intake amount for a combination of different consumables placed on a single container.

10. An information processing method for controlling a measuring device including a weight meter configured to measure a weight, the information processing method comprising:
determining, on the basis of a weight of at least one consumable measured by the weight meter, an intake amount involved in consumption of the at least one consumable concerning at least one of a component and a calorie determined in advance;
identifying a purchaser of the at least one consumable; and
performing notification processing for, when a reference amount decided in association with the identified purchaser and the determined intake amount are in a predetermined relation, notifying the purchaser to that effect.

11. The method according to claim 10, further comprising:
reading an identification code stored in a storage medium, and
identifying the purchaser as a person identified by the identification code read by the reader.

12. The method according to claim 10 or 11, comprising transmitting information to one or more information terminals after performing the notification processing.

13. The method according to any one of claims 10 to 12, further comprising displaying the notification and a result of the determination of the intake amount.

14. An information processing method for controlling a measuring device including a weight meter configured to measure a weight, the information processing method comprising:
generating a list of consumables, weights of which are measured previously by the weight meter, the list of consumables including their respective measured weights;
determining, on the basis of the weights of the respective consumables included in the generated list, an intake amount involved in consumption of the consumables;
identifying a purchaser of the consumables; and
performing notification processing for, when a reference amount decided in association with the identified purchaser and the determined intake amount are in a predetermined relation, notifying the purchaser to that effect.

15. The method according to claim 14, further comprising determining the intake amount for a combination of different consumables placed on a single container.
